# EUROPÄISCHE PATENTSCHRIFT

(11) **EP 0 849 383 B1**
(45) Veröffentlichungstag und Bekanntmachung des Hinweises auf die Patenterteilung: **12.09.2001**
(21) Anmeldenummer: 97121805.2
(22) Anmeldetag: 11.12.1997
(51) Int. Cl.: D01H 5/52

(54) **Pneumatische Belastungsvorrichtung eines Streckwerkes in einer Spinnmaschine**
Pneumatic loading device of a drafting machine in a spinning frame
Dispositif pneumatique pour charger un système d'étirage dans un métier à filer

(30) Priorität: 17.12.1996 DE 19652372
(43) Veröffentlichungstag der Anmeldung: 24.06.1998
(73) Patentinhaber: Zinser Textilmaschinen GmbH, D-73058 Ebersbach/Fils (DE)
(72) Erfinder: Wussmann, Holger, 70794 Filderstadt (DE); Weber, Reinhold, 73269 Hochdorf (DE); Halder, Ernst, 73116 Wäschenbeuren (DE)

(56) Entgegenhaltungen:
- DE-A- 3 810 998
- DE-U- 8 521 340
- DE-U- 29 609 348
- PATENT ABSTRACTS OF JAPAN vol. 012, no. 139 (C-491), 27. April 1988 & JP 62 257426 A (TORAY IND INC), 10. November 1987

## Beschreibung

Die Erfindung betrifft ein Verfahren und eine Einrichtung zur Leckageüberwachung in der Druckmittelleitung mindestens einer pneumatischen Belastungsvorrichtung eines Streckwerkes in einer Spinnmaschine, die eine Druckquelle, ein Ventil, einen Druckmesser, einen Durchflussmesser und eine Vorrichtung aufweisen kann, die die Stellung des Ventils beeinflußt und die mit dem Druckmesser und/oder dem Durchflussmesser verbunden sein kann.
Aus der DE-A-3810998 ist ein Verfahren zur Erfassung von Geometrieveränderungen und Leckagen in Rohrleitungsnetzen mit veränderlichem Durchfluss bekannt. Dabei werden durch Messen des Druckabfalls an einer Blende und Messen des absoluten Drucks Durchflusskennlinien miteinander verglichen. Im Gegensatz dazu befasst sich die Erfindung mit einem statischen pneumatischen System.

Eine derartige Einrichtung und ein derartiges Verfahren ist aus dem deutschen Gebrauchsmuster 296 09 348.3 bekannt. Bei dieser Einrichtung besteht der Durchflussmesser aus einem in einem konischen Rohr geführten Schwimmkörper, dessen Höhenstellung durch einen neben dem konischen Rohr angeordneten Sensor abgetastet wird. Da der tolerierbare Leckageverlust und damit der Durchfluss vom Betriebsdruck der Anlage abhängt, muß die Stellung des Sensors bei einer Änderung des Betriebsdruckes angepaßt werden. Wenn diese Anpassung unterbleibt, kann es sein, daß infolge überhöhter Leckageverluste der vorgesehene Betriebsdruck nicht erreicht wird. Dadurch wird auch der vorgesehene Anpressdruck der Walzen nicht erreicht, was zu Qualitätseinbußen am erzeugten Garn führen kann. Wie genau diese Anpassung erfolgen muß, erhellt daraus, daß bei Arbeitsdrücken von 1,5 bis 4 bar bereits Abweichungen von 0,3 bar mindestens als Änderung des Garncharakters erkennbar sind.

In der genannten Druckschrift ist zwar erwähnt, daß auch andere Durchflußmesser einsetzbar sind. Es ist jedoch kein Hinweis gegeben, wie der Grenzwert des Durchflusses an einen anderen Arbeitsdruck oder an geänderte Spinnparameter angepaßt werden kann, ohne daß man auf die Zuverlässigkeit der Bedienperson angewiesen wäre.

Der Erfindung war daher die Aufgabe gestellt, ein Verfahren und eine Einrichtung anzugeben, die es gestatten, die Grenzwerte der Leckageverluste selbsttätig an den Sollwert des Druckes in der Druckmittelzuleitung zu den Belastungselementen des Streckwerkes anzupassen.

Diese Aufgabe wird in einer ersten Ausführungsform durch die Merkmale im Kennzeichen des ersten Anspruches gelöst. Bei Zuführen von Druckmittel in die Druckmittelzuleitung entsteht am Durchflußwiderstand ein Druckabfall, der mit größer werdendem Leckageverlust größer wird und bei entsprechend hohem Leckageverlust den vorgesehenen Solldruck nicht mehr erreichen läßt.

In einer zweiten Ausführungsform wird die gestellte Aufgabe durch die Merkmale im Kennzeichen des zweiten Anspruches gelöst. Bei zunehmendem Leckageverlust gibt die Vorrichtung ein immer größer werdendes Stellsignal zum weiteren Öffnen des Ventils ab. Dieses Stellsignal ist eine Funktion des Leckageverlustes.

In einer weiteren Ausführungsform wird die gestellte Aufgabe durch die Merkmale im Kennzeichen des dritten Anspruches gelöst. Hierbei wird nicht wie vorstehend das Stellsignal der Vorrichtung an das Ventil zur Überwachung herangezogen, sondern direkt die Stellung des Ventils.

Schließlich kann die gestellte Aufgabe durch die Merkmale im Kennzeichen des vierten Anspruches gelöst werden. Hierbei wird der Zufluß von Druckmittel in die Druckmittelleitung als Durchfluß durch einen Durchflußmesser erfaßt.

Da beim Befüllen einer zuvor leeren Druckmittelleitung ein sehr hoher Durchsatz von Druckmittel erforderlich ist, der durch einen Durchflußwiderstand oder einen Durchflußmesser behindert wäre und der auch kein Störsignal abgeben soll, ist in weiterer Ausgestaltung der Erfindung die Maßnahme nach Anspruch 6 vorgesehen.
Da bestimmten Arbeitsdrücken der Belastungsvorrichtungen - abhängig von bestimmten Spinnparametern - bestimmte Grenzwerte des Mindestdruckes und der tolerierbaren Leckage zugeordnet sind, wird in weiterer Ausgestaltung der Erfindung vorgeschlagen, die Vorrichtung mit einem Speicher auszustatten, in dem derartige Wertepaare speicherbar sind. Vorteilhafterweise ist diesem Speicher eine Eingabevorrichtung und eine Anzeigevorrichtung zugeordnet, mittels deren den Wertepaaren Spinnparameter zugeordnet werden können. Auf diese Weise sind Datensätze von erfolgreichen Spinnprogrammen abspeicherbar, die bei Bedarf wieder aufgerufen oder auf andere Streckwerke übertragen werden können.

Da es sich gezeigt hat, daß jedes Streckwerk seine individuelle Leckage aufweist und es in aller Regel genügt, eine aufgetretene Erhöhung dieser individuellen Leckage zu erkennen, kann der Vorrichtung ein Algorithmus eingegeben werden, mittels dessen sie Standardwerte tolerierbarer Leckagen an ihre individuelle Leckage anpassen kann.

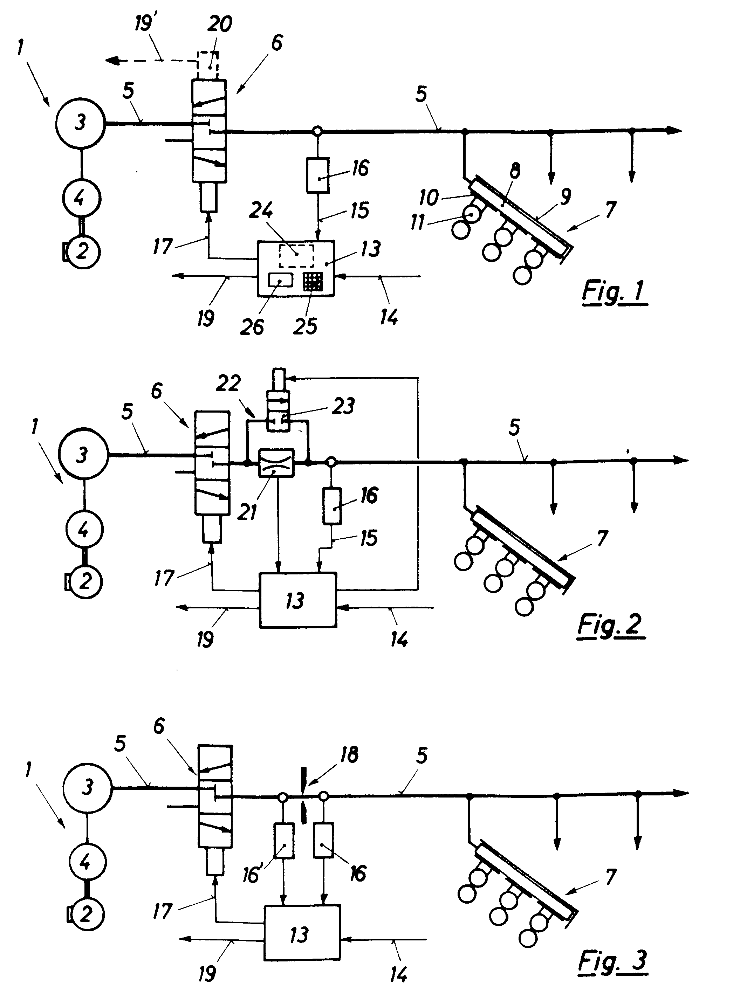

In den Figuren 1 bis 3 der Zeichnung sind Ausführungsbeispiele der Erfindung als fluidische Schaltschemata dargestellt.

In allen Ausführungsformen ist eine Druckmittelquelle 1 bspw. in Form einer mittels eines Motors 2 angetriebenen, einen Druckspeicher 3 befüllenden Druckmittelpumpe 4 vorgesehen. In die Druckmittelleitung 5 ist ein vorzugsweise elektromagnetisch ansteuerbares 3/3-Wegeventil 6 eingeschaltet. An die Druckmittelleitung 5 sind Belastungsvorrichtungen 7 angeschlossen, von denen in den Figuren nur eine weitgehend schematisiert dargestellt ist. Diese Belastungsvorrichtungen können bspw. als schlauchförmige Druckelemente 8 ausgebildet sein, die in starren Tragarmen 9 eingebettet sind und über Druckschuhe 10 Oberwalzen 11 eines Streckwerkes 12 gegen Unterwalzen drücken. In den Figuren ist jeweils nur eine Belastungsvorrichtung 7 dargestellt, es versteht sich, daß ein Streckwerk eine Vielzahl derartiger Belastungsvorrichtungen aufweist.

Die Druckmittelleitung 5 weist daher notwendigerweise auch eine Vielzahl von Verbindungsstellen und - da die Tragarme 9 aufklappbar sind - flexibler Schlauchverbindungen auf. Diese Bestandteile der Druckmittelleitung 5 sind unvermeidlich mit Undichtheiten belastet, die Leckagestellen darstellen, durch die laufend eine mehr oder minder große Menge von Druckmittel - in der Regel Luft - entweicht und ersetzt werden muß. Wenn die Leckageverluste ein gewisses Maß überschreiten, muß auf diesen Umstand aufmerksam gemacht und gegebenenfalls die Maschine selbsttätig stillgesetzt werden, um Qualitätseinbußen am erzeugten Garn zu vermeiden.

Hierzu dient eine Vorrichtung 13, die allgemein gesprochen als Rechner ausgebildet ist und der über eine Leitung 14 ein Sollwert eingegeben werden kann und über eine Leitung 15 ein Istwert des Druckes in der Druckmittelleitung 5 zugeführt wird, der von einem an dieser anliegenden Druckmesser 16 ermittelt wird. Nach Maßgabe dieser Soll- und Istwerte generiert die Vorrichtung 13 ein Stellsignal, das über eine Leitung 17 dem Ventil 6 aufgedrückt wird. Dieses Stellsignal wird so generiert, daß es das Ventil 6 im Sinne eines Angleichens des Istdruckes an den Solldruck in der Druckmittelleitung 4 beeinflußt.

Bei Leckageverlust in der Druckmittelleitung 5 entsteht ein Druckabfall, der zunächst durch die Vorrichtung 13 durch weiteres Öffnen des Ventils 6 ausgeglichen wird. Bei zunehmendem Leckageverlust gelingt dieser Ausgleich infolge des begrenzten Durchlasses der Zuleitungen nicht mehr und der Druck in der Druckmittelleitung 5 fällt ab. Dieser Abfall wird über den Druckmesser 16 durch die Vorrichtung 13 erfaßt und veranlaßt diese, wenn ein erster Grenzwert des Druckes unterschritten wird, zur Abgabe zunächst eines Vorwarnsignales über eine Leitung 19, durch das auf die zunehmende Leckage aufmerksam gemacht und Gelegenheit zum Eingreifen gegeben wird. Wenn nicht eingegriffen wird und der Druck weiter bis unter einen zweiten Grenzwert abfällt oder der Druck bspw. durch Platzen eines Verbindungsschlauches schlagartig unter diesen zweiten Grenzwert abfällt, unter dem Qualitätseinbußen am Garn zu befürchten sind, gibt die Vorrichtung 13 ein Störsignal ab, durch das die Maschine selbsttätig stillgesetzt werden kann.

Das Vorwarnsignal kann ein die Bedienperson auf die Leckage aufmerksam machendes optisches oder akustisches Alarmzeichen auslösen. Dieses Alarmzeichen kann auch neben dem zu einem Stillsetzen der Maschine führenden Störsignal gesetzt werden, um die Bedienperson auf den Grund des Stillsetzens der Maschine hinzuweisen.
Die Abgabe eines Vorwarn- oder Störsignals bei Nichterreichen des Solldruckes in der Druckmittelleitung 5 hat den Vorteil, daß hiermit nicht nur Leckageverluste erfaßt werden, sondern auch andere, das Nichterreichen des Solldruckes verursachende Fehler, bspw. nicht ausreichende Druckmittelversorgung durch die Druckmittelquelle 1.

Wie schon erwähnt, öffnet die Vorrichtung 13 bei Druckabfall in der Druckmittelleitung 5 das Ventil 6 weiter. Die Öffnungsstellung des Ventils 6 ist daher ein Maß für die Höhe des Leckageverlustes. In einer anderen Ausführungsform der Einrichtung überwacht daher die Vorrichtung 13 die Größe des Stellsignals an das Ventil 6 und gibt dann, wenn dieses Stellsignal einen Grenzwert überschreitet, das Vorwarn- oder das Störsignal ab.

In einer weiteren Ausführungsform der Einrichtung ist vorgesehen, die Stellung des Ventils 6 direkt, also nicht über das durch die Vorrichtung 13 an das Ventil 6 geleitete Stellsignal zu überwachen. Hierzu ist das Ventil 6 mit einem in Fig. 1 gestrichelt angedeuteten Stellungsfühler 20 versehen, der bei Erreichen einer einstellbaren Grenzstellung des Ventils über die Leitung 19' das Vorwarn- oder das Störsignal abgibt.

In der Ausführungsform der Fig. 2 ist in die Druckmittelleitung 5 ein Durchflußmesser 21 eingefügt, der mit der Vorrichtung 13 verbunden ist. Hier ist die Funktion so, daß die Vorrichtung 13 ein Vorwarn- oder ein Störsignal abgibt, wenn nach Befüllen der Druckmittelleitung 5 der Durchflußmesser 21 der Vorrichtung 13 weiterhin einen Zufluß von Druckmittel meldet, der die einstellbaren Grenzwerte überschreitet und damit überhöhte Leckage anzeigt.

Der Durchflußmesser 21 stellt ebenso ein Hindernis für das Strömen des Druckmittels dar. Dieses Strömungshindernis beeinträchtigt das Befüllen der Druckmittelleitung 5, da es das Einströmen des Druckmittels verzögert. Auch kann Durchflußmesser 21 beim Befüllen der Druckmittelleitung 5 infolge der dabei auftretenden hohen Strömgeschwindigkeit und den dadurch bewirkten starken Druckabfall beschädigt werden. Um diese Nachteile und Gefahren zu vermeiden, ist gemäß Fig. 2 vorgesehen, dem Durchflußmesser 21 einen Bypass 22 vorzugsweise in Form eines 2/2-Wegeventils 23 zuzuordnen. Dieses Wegeventil 23 ist vorzugsweise durch die Vorrichtung 13 ansteuerbar und wird durch diese beim Befüllen der Druckmittelleitung 5 geöffnet. Dadurch kann das Druckmittel unter Umgehung des Durchflußmessers 21 rasch in die Druckmittelleitung 5 einströmen. Es versteht sich, daß ein solcher Bypass 22 mit Vorteil auch dem Durchflußwiderstand 18 der Fig. 3 zugeordnet werden kann.

Es ist eine Vielzahl von auf unterschiedlichen Prinzipien beruhenden Durchflußmessern bekannt. Die Fig. 3 zeigt eine Ausführungsform des Durchflußmessers 21. Er umfaßt einen in der Druckmittelleitung 5 angeordneten Durchflußwiderstand 18 bspw. in Form einer Blende und je einen Druckmesser 16 und 16' vor und hinter der Blende. Bei Einfließen von Druckmittel in die Druckmittelleitung 5 baut sich an der Blende ein Druckabfall auf, der eine Funktion des Durchflusses ist. Dieser Druckabfall wird durch die beiden Druckmesser 16, 16' erfaßt und der Vorrichtung 13 zugeleitet. Aus den zugeleiteten Signalen errechnet die Vorrichtung den Durchfluß und gibt wie vorstehend beschrieben bei Überschreiten eines Grenzwertes des Durchflusses ein Vorwarn- oder ein Störsignal ab.

Der Druckmesser 16 der Fig. 3 kann zugleich der Druckmesser sein, nach dessen Maßgabe die Vorrichtung 13 die Stellung des Ventils 6 steuert. Es sind auch Steuer- oder Regelventile bekannt, in die die Funktion der Vorrichtung 13 integriert sind. Einem solchen Ventil braucht daher nur der Sollwert und der Istwert zugeleitet zu werden, nach deren Maßgabe es dann den Durchfluß zur Aufrechterhaltung des Druckes in der Druckmittelleitung 5 regelt.

In Fig. 1 ist ein in der Vorrichtung 13 vorgesehener Datenspeicher 24 angedeutet, in dem Daten wie der Sollwert des Arbeitsdruckes in der Druckmittelleitung 5 und der diesem zugeordnete Grenzwert der Leckage speicherbar sind. Die Vorrichtung 13 kann ferner mit einer Eingabevorrichtung in Form einer Tastatur 25 versehen sein, mittels deren weitere Daten eingebbar und auf einer Anzeigevorrichtung 26 kontrollierbar sind wie bspw. Spinnparameter mit Relevanz zum Arbeitsdruck und Leckage wie etwa Feinheit des gesponnen Garnes, Stapellänge der versponnen Fasern, Klemmlinienabstände der Streckwerkswalzen und dergleichen. Die so gebildeten Datensätze können bei Bedarf als Steuerprogramm der Vorrichtung wieder aufgerufen werden und müssen nicht jeweils neu erarbeitet oder eingegeben werden.

Es kann vorgesehen sein, daß eine Spinnmaschine nach einem Stillstand, mindestens jedoch nach einer Umstellung der Spinndaten erst dann wieder in Betrieb genommen werden kann, wenn ein Datensatz des Datenspeichers 24 aktiviert oder die Aktivierung eines Datensatzes bestätigt worden ist. Auf diese Weise kann weitestgehend vermieden werden, daß Partien mit unzutreffenden Grenzwerten für die Leckage gesponnen werden.

Der Datenspeicher kann ferner so ausgebildet sein, daß er die erfaßten Druck-, Ventilstellungs- oder Durchflußwerte als Leckagewerte rücklesbar speichert. Dadurch wird es möglich, Langzeittrends in der Veränderung der Leckage eines Streckwerkes zu erkennen und einzugreifen, bevor die Grenzwerte erreicht werden.

### Bezugszahlenliste

- 1: Druckmittelquelle
- 2: Motor
- 3: Druckspeicher
- 4: Druckmittelpumpe
- 5: Druckmittelleitung
- 6: 3/3-Wegeventil
- 7: Belastungsvorrichtung
- 8: Druckelemente
- 9: Tragarme
- 10: Druckschuhe
- 11: Oberwalzen
- 12: Streckwerk
- 13: Vorrichtung
- 14: Sollwert-Leitung
- 15: Istwert-Leitung
- 16: Druckmesser
- 17: Stellsignal-Leitung
- 18: Durchflußwiderstand
- 19: Störsignal-Leitung
- 20: Stellungsfühler
- 21: Durchflußmesser
- 22: Bypass
- 23: 2/2-Wegeventil
- 24: Datenspeicher
- 25: Tastatur
- 26: Anzeigevorrichtung

## Patentansprüche

1. Verfahren zur Leckageüberwachung in der Druckmittelleitung (5) einer Mehrzahl pneumatischer Belastungsvorrichtungen (7) eines Streckwerkes in einer Spinnmaschine, mit einer Druckquelle (1), einem Ventil (6), einem Druckmesser (16) und einer Vorrichtung (13), die die Stellung des Ventils (6) beeinflußt und die mit dem Druckmesser (16) verbunden ist,
**dadurch gekennzeichnet, daß** die Vorrichtung (13) die Stellung des Ventils (6) nach Maßgabe eines vorgegebenen Sollwertes und des vom Druckmesser (16) gemeldeten Istwertes des Druckes in der Druckmittelzuleitung regelt und bei einem einen Grenzwert unterschreitenden Druck in der Druckmittelleitung ein Störsignal abgibt. (Fig. 1)

2. Verfahren zur Leckageüberwachung in der Druckmittelleitung (5) einer Mehrzahl pneumatischer Belastungsvorrichtungen (7) eines Streckwerkes (12) in einer Spinnmaschine, mit einer Druckquelle (1), einem Ventil (6), einem Druckmesser (16) und einer Vorrichtung (13), die die Stellung des Ventils (6) beeinflußt und die mit dem Druckmesser (16) verbunden ist,
**dadurch gekennzeichnet, daß** die Vorrichtung (13) die Stellung des Ventils (6) nach Maßgabe eines vorgegebenen Sollwertes und des vom Druckmesser (16) gemeldeten Istwertes des Druckes in der Druckmittelzuleitung (5) regelt und bei einem einen Grenzwert überschreitenden Stellsignal an das Ventil ein Störsignal abgibt. (Fig. 1)

3. Einrichtung zur Leckageüberwachung in der Druckmittelleitung (5) einer Mehrzahl pneumatischer Belastungsvorrichtungen (7) eines Streckwerkes (12) in einer Spinnmaschine, mit einer Druckquelle (1), einem Ventil (6), einem Druckmesser (16) und einer Vorrichtung (13), die die Stellung des Ventils (6) beeinflußt und die mit dem Druckmesser (16) verbunden ist,
**dadurch gekennzeichnet, daß** das Ventil (6) mit einem Stellungsfühler (20) versehen ist, der beim Überschreiten einer einstellbaren Grenzstellung des Ventils ein Störsignal abgibt. (Fig. 1)

4. Verfahren zur Leckageüberwachung in der Druckmittelleitung (5) einer Mehrzahl pneumatischer Belastungsvorrichtungen (7) eines Streckwerkes (12) in einer Spinnmaschine, mit einer Druckquelle (1), einem Ventil (6), einem Druckmesser (16) einem Durchflußmesser (21) und einer Vorrichtung (13), die die Stellung des Ventils (6) beeinflußt und die mit dem Druckmesser (16) und dem Durchflußmesser (21) verbunden ist,
**dadurch gekennzeichnet, daß** die Vorrichtung (13) mittels eines eingegebenen Algorithmus Standardwerte tolerierbarer Leckagen an ihre individuelle Leckage anpasst und bei einem einen Grenzwert überschreitenden, mittels des Durchflussmessers (21) erfaßten Durchflusses in der Druckmittelleitung (5) ein Störsignal abgibt. (Fig. 2)

5. Verfahren nach Anspruch 4, **dadurch gekennzeichnet, daß** der Durchflussmesser (21) einen Durchflusswiderstand (18) und je einen Druckmesser (16, 16') zu beiden Seiten des Durchflusswiderstandes aufweist. (Fig. 3)

6. Verfahren nach Anspruch 4 oder 5,
**dadurch gekennzeichnet, daß** sie einen beim Befüllen der Druckmittelleitung (5) einschaltbaren Bypass (22) um den Durchflußwiderstand (18) bzw. den Durchflußmesser (21) aufweist. (Fig. 2)

7. Verfahren nach einem oder mehreren der Ansprüche 1,2 oder 4 bis 6, **dadurch gekennzeichnet, daß** die Vorrichtung (13) einen Datenspeicher (24) umfaßt, in dem Zuordnungen von Arbeitsdrücken und Grenzwerten zu Spinnparametern eingebbar und abspeicherbar sowie wieder abrufbar sind.

8. Verfahren nach Anspruch 7, **dadurch gekennzeichnet, daß** die Vorrichtung (13) eine Routine umfaßt, gemäß der nach einem Stillstand oder zumindest nach einer Umstellung der Spinnparameter der Maschine diese erst nach Aktivieren eines Datensatzes oder nach Bestätigung eines aktivierten Datensatzes wieder in Betrieb genommen werden kann.

9. Verfahren nach Anspruch 7, **dadurch gekennzeichnet, daß** der Datenspeicher (24) erfaßte Leckagewerte rücklesbar speichert.

## Claims

1. Method for monitoring the leakage in the pressure-medium line (5) of a plurality of pneumatic load-exerting devices (7) of a drawframe in a spinning machine, with a pressure source (1), a valve (6), a pressure gauge (16) and a device (13) which influences the position of the valve (6) and is connected to the pressure gauge (16), **characterized in that** the device (13) regulates the position of the valve (6) according to a predetermined desired value and to the actual value, communicated by the pressure gauge (16), of the pressure in the pressure-medium feed line and emits a fault signal when the pressure in the pressure-medium line falls short of a limit value. (Fig. 1)

2. Method for monitoring the leakage in the pressure-medium line (5) of a plurality of pneumatic load-exerting devices (7) of a drawframe (12) in a spinning machine, with a pressure source (1), a valve (6), a pressure gauge (16) and a device (13) which influences the position of the valve (6) and is connected to the pressure gauge (16), **characterized in that** the device (13) regulates the position of the valve (6) according to a predetermined desired value and to the actual value, communicated by the pressure gauge (16), of the pressure in the pressure-medium feed line (5) and transmits a fault signal to the valve in the event of an actuating signal which exceeds a limit value. (Fig. 1)

3. Apparatus for monitoring the leakage in the pressure-medium line (5) of a plurality of pneumatic load-exerting devices (7) of a drawframe (12) in a spinning machine, with a pressure source (1), a valve (6), a pressure gauge (16) and a device (13) which influences the position of the valve (6) and is connected to the pressure gauge (16), **characterized in that** the valve (6) is provided with a position sensor (20) which emits a fault signal when an adjustable limit position of the valve is exceeded. (Fig. 1)

4. Method for monitoring the leakage in the pressure-medium line (5) of a plurality of pneumatic load-exerting devices (7) of a drawframe (12) in a spinning machine, with a pressure source (1), a valve (6), a pressure gauge (16), a flowmeter (21) and a device (13) which influences the position of the valve (6) and is connected to the pressure gauge (16) and to the flowmeter (21), **characterized in that** the device (13) adapts standard values of acceptable leakages to its individual leakage by means of an entered algorithm and emits a fault signal when the throughflow detected in the pressure-medium line (5) by means of the flowmeter (21) exceeds a limit value. (Fig. 2)

5. Method according to Claim 4, **characterized in that** the flowmeter (21) has a throughflow resistance (18) and, on each of the two sides of the flow resistance, a pressure gauge (16, 16'). (Fig. 3)

6. Method according to Claim 4 or 5, **characterized in that** it has a bypass (22), capable of being cut in during the filling of the pressure-medium line (5), around the throughflow resistance (18) or the flowmeter (21). (Fig. 2)

7. Method according to one or more of Claims 1, 2 or 4 to 6, **characterized in that** the device (13) comprises a data store (24), in which assignments of working pressures and limit values to spinning parameters can be entered and stored and can be retrieved again.

8. Method according to Claim 7, **characterized in that** the device (13) comprises a routine whereby, after a standstill or at least after a changeover of the spinning parameters of the machine, the latter can be put into operation again only after the activation of a data record or after the confirmation of an activated data record.

9. Method according to Claim 7, **characterized in that** the data store (24) stores detected leakage values so that they are capable of being read back.

## Revendications

1. Procédé de contrôle des fuites dans la conduite d'un fluide sous pression (5) d'une pluralité de dispositifs de charge pneumatiques (7) d'un dispositif d'étirage dans un métier à filer, avec une source de pression (1), une soupape (6), un indicateur de pression (16) et un dispositif (13) qui influe sur la position de la soupape (6) et qui est relié à l'indicateur de pression (16), **caractérisé en ce que** le dispositif (13) régule la position de la soupape (6) suivant l'indication d'une valeur de consigne prédéterminée et de la valeur effective affichée par l'indicateur de pression (16) de la pression dans la conduite d'amenée du fluide sous pression et émet un signal d'anomalie lorsque la pression dans la conduite du fluide sous pression descend en deçà d'une valeur limite (figure 1).

2. Procédé de contrôle des fuites dans la conduite d'un fluide sous pression (5) d'une pluralité de dispositifs de charge pneumatiques (7) d'un dispositif d'étirage (12) dans un métier à filer, avec une source de pression (1), une soupape (6), un indicateur de pression (16) et un dispositif (13) qui influe sur la position de la soupape (6) et qui est relié à l'indicateur de pression (16), **caractérisé en ce que** le dispositif (13) régule la position de la soupape (6) suivant l'indication d'une valeur de consigne prédéterminée et de la valeur effective affichée par l'indicateur de pression (16) de la pression dans la conduite d'amenée du fluide sous pression (5) et, lorsque le signal de position de la soupape dépasse une valeur limite, émet un signal d'anomalie (figure 1).

3. Dispositif de contrôle des fuites dans la conduite d'un fluide sous pression (5) d'une pluralité de dispositifs de charge pneumatiques (7) d'un dispositif d'étirage (12) dans un métier à filer, avec une source de pression (1), une soupape (6), un indicateur de pression (16) et un dispositif (13) qui influe sur la position de la soupape (6) et qui est relié à l'indicateur de pression (16), **caractérisé en ce que** la soupape (6) est équipée d'un détecteur de position (20), qui, en cas de dépassement d'une position limite réglable de la soupape, émet un signal d'anomalie (figure 1).

4. Procédé de contrôle des fuites dans la conduite d'un fluide sous pression (5) d'une pluralité de dispositifs de charge pneumatiques (7) d'un dispositif d'étirage (12) dans un métier à filer, avec une source de pression (1), une soupape (6), un indicateur de pression (16), un indicateur de débit (21) et un dispositif (13) qui influe sur la position de la soupape (6) et qui est relié à l'indicateur de pression (16) et à l'indicateur de débit (21), **caractérisé en ce que** le dispositif (13) adapte à sa fuite individuelle des valeurs standard de fuites admissibles et, au moyen d'un algorithme donné, en cas de débit dépassant une valeur limite dans la conduite du fluide sous pression (5), détecté au moyen de l'indicateur de débit (21), émet un signal d'anomalie (figure 2).

5. Procédé selon la revendication 4, **caractérisé en ce que** l'indicateur de débit (21) comporte une résistance à l'écoulement (18) et chaque fois un indicateur de pression (16, 16') des deux côtés de la résistance à l'écoulement (figure 3).

6. Procédé selon la revendication 4 ou 5, **caractérisé en ce qu'**il comporte une dérivation (22) pouvant être commutée lors du remplissage de la conduite du fluide sous pression (5) qui contourne la résistance à l'écoulement (18) ou de l'indicateur de débit (21) (figure 2).

7. Procédé selon une ou plusieurs des revendications 1, 2 ou 4 à 6, **caractérisé en ce que** le dispositif (13) comprend un dispositif de mémorisation des données (24), dans lequel les instructions concernant les pressions de service et les valeurs limites par rapport aux paramètres de filage peuvent être entrées et enregistrées, ainsi qu'être de nouveau rappelées.

8. Procédé selon la revendication 7, **caractérisé en ce que** le dispositif (13) comporte une routine suivant laquelle, après un arrêt ou au moins après modification des paramètres de filage de la machine, celle-ci ne peut être remise en marche qu'après activation d'un bloc de données ou après validation d'un bloc de données activé.

9. Procédé selon la revendication 7, **caractérisé en ce que** le dispositif de mémorisation des données (24) enregistre les valeurs de fuite de façon à ce que celles-ci puissent être relues.
